Europäisches Patentamt

European Patent Office

Office européen des brevets

(11) Publication number: **0 464 267 A1**

## EUROPEAN PATENT APPLICATION

(21) Application number: **90201687.2**

(22) Date of filing: **26.06.90**

(51) Int. Cl.5: **A01F 15/10**

(43) Date of publication of application:
**08.01.92 Bulletin 92/02**

(84) Designated Contracting States:
**DE FR GB**

(71) Applicant: **FORD NEW HOLLAND N.V.**
**Leon Claeysstraat 3a**
**B-8210 Zedelgem(BE)**

(72) Inventor: **De Busscher, Cyriel R.J.**
**Stationstraat 183**
**B-8340 Damme (Sijsele)(BE)**

(74) Representative: **Vandenbroucke, Alberic T.J.**
**FORD NEW HOLLAND N.V. Leon Claeysstraat**
**3A**
**B-8210 Zedelgem(BE)**

(54) **Peak load safety device for a round baler.**

(57) A round baler comprising a bale chamber, a crop pick-up device (3) operable to pick up crop from the ground and a crop feed mechanism (33) operable to feed crop into the bale chamber from the pick-up device (3), the feed mechanism (33) comprising at least one tine bar (31) fitted with a plurality of tines (32), a drive (11 to 27) operable to drive the tine bar (31) so that the tips of the tines (32), during normal operation, describe an elongated operative path of movement (58) extending in the direction from the pick-up device (3) to the bale chamber, and a safety device (37/37') to protect the drive (11 to 27) and the tine bar (31) if the feed mechanism (33) is subjected to loads in excess of a predetermined value,

characterized in that

the safety device comprises a break-away mechanism (37/37') operable to permit the tines (32) to follow a shortened path of movement (59) when subjected to a load in excess of said predetermined value and to revert to the normal path of movement (58) when said predetermined value is no longer exceeded.

This invention relates to round balers, the name given to machines for producing cylindrical bales of crop material, and more particularly, to such balers fitted with a safety device responsive to peak loading of a feed mechanism for the crop material to be baled.

Round balers are provided with a crop pick-up mechanism operable to pick up crop material from the ground and pass it to a feed mechanism which, in turn, passes it into the bale chamber of the machine to be added to the periphery of the bale being formed in the machine. Typically, the feed mechanism comprises a plurality of tines mounted on a tine bar and extendable through a slotted member, such as a feeder floor. The tine bar is driven such that the tines are moved through a cycle of operation at the commencement of which the tines extend through the feeder floor as crop material is taken by said tines from the pick-up device and is first fed towards and then stuffed into the bale chamber at which time the tines are retracted from the feeder floor and taken back to the beginning of another feed and stuffing cycle.

One example of such a round baler with a feed mechanism is disclosed in US-A-4.198.804; said feed mechanism being shown in detail in Figure 4 of the drawings thereof. In this embodiment, of the feed mechanism, the tines have associated with them a Bellcrank lever operable to drive the tines such that the operative tips thereof describe a generally kidney-shaped path. The other ends of the tines are pivotally attached to one end of a lever, the other end of which is pivotally attached to the frame of the baler.

It is common to provide in the drive for the feed mechanism some form of safety mechanism, such as a shear bolt, in order to protect that drive and associated components from high peak loads to which the feed mechanism may be subjected in feeding and stuffing the crop material into the bale chamber. It has been found that, as these balers are operated as close as possible to maximum capacity; this being an objective of all farmers, there can be a high incidence of shear bolt failures. One of the main contributing factors to this situation is that of the differential in the speeds of movement of the tines of the feed mechanism and of the periphery of the bale being formed. Typically, the tines of the feed mechanism are moving at 4 metres per second. Accordingly, the feed tines are always effecting a compaction of the crop material as it is being stuffed into the bale chamber and, if at a given instant these tines are handling a particularly large wad of crop material, the peak loading on said tines resulting therefrom can be such as to give rise to a failure of the shear bolt, or other safety device. Although this protects, as required, the drive and associated components, the resulting down-time of the machine necessary to fit a new shear bolt is very undesirable, particularly if there is a high incidence of shear bolt failures.

The present invention is defined in the appended claims and provides a round baler with a safety device to protect at least the drive for the feed mechanism, the safety device comprising a break-away mechanism operable to permit the tines to follow a shortened path when subjected to a load in excess of a predetermined value and to revert to the normal path of operation when said predetermined value is not exceeded.

A round baler embodying the invention will now be described in greater detail, by way of example, with reference to the accompanying drawings, in which :

Figure 1 is a somewhat diagrammatic side view of a baler,

Figure 2 is a detail, to an enlarged scale, of Figure 1 and,

Figure 3 is a view similar to that of Figure 2 but in respect of an alternative embodiment.

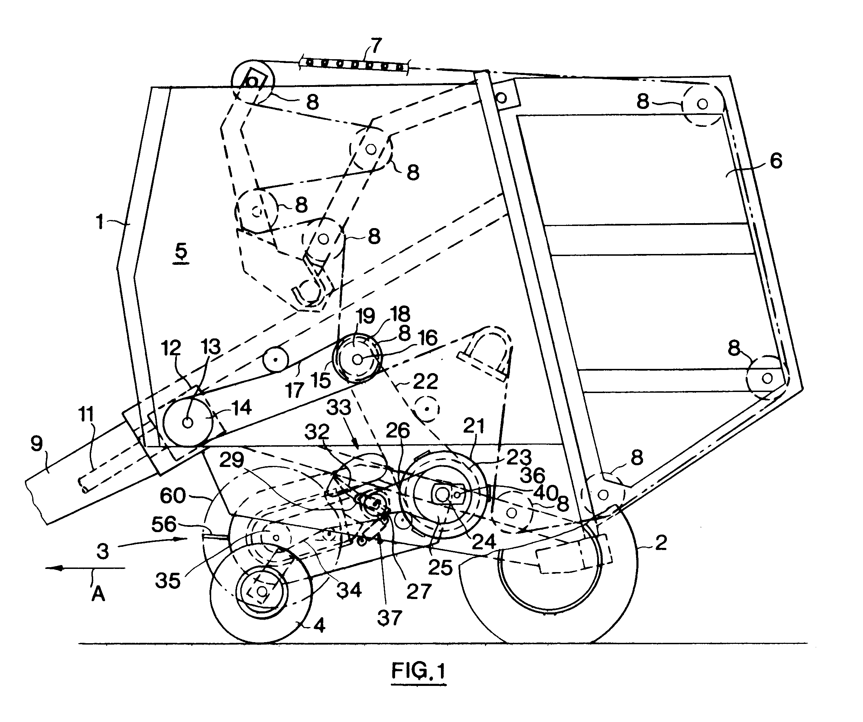

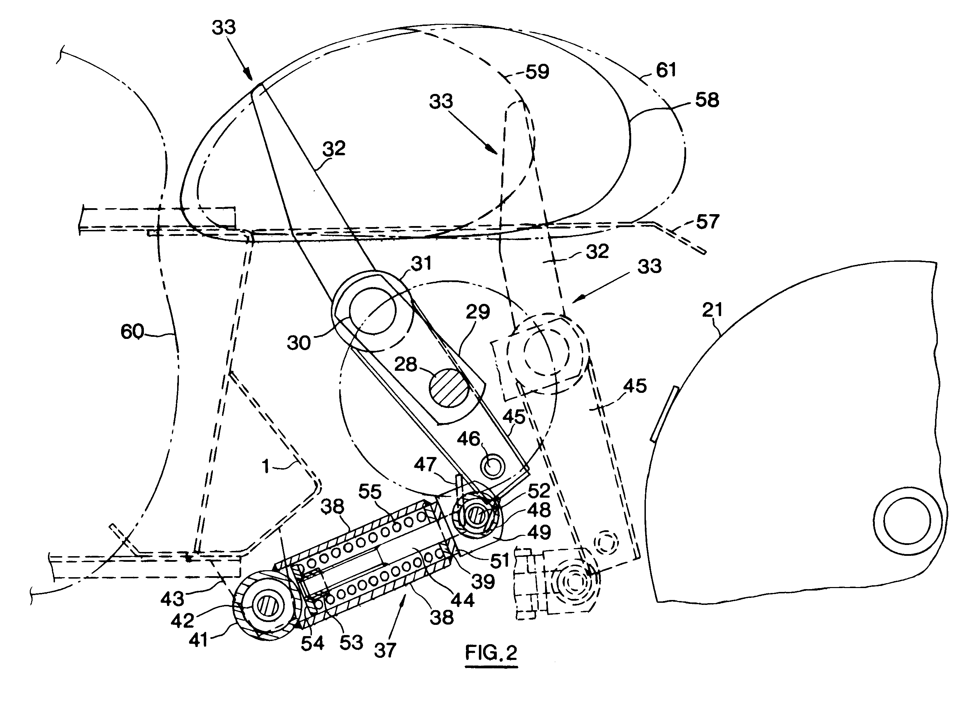

Referring to Figure 1 of the drawings, the round baler comprises a main frame 1 supported on a pair of wheels 2 and a crop pick-up device 3 supported on a pair of wheels 4. A bale chamber is formed within a fixed main portion 5 and a tailgate portion 6 pivotally connected to said main portion 5 for pivotal movement away therefrom in order to allow a completed bale to be discharged from the baler. A bale forming apron 7 extends around guide rolls 8 rotatably mounted in the main portion 5 and tailgate portion 6. The round baler also comprises a tongue 9 for attachment to a tractor (not shown) so that the baler may be towed across a field to pick up crop material and form it into cylindrical or round bales. A main drive shaft 11 arranged for connection to the P.T.O. of a towing tractor provides a drive input to a gearbox 12, an output shaft 13 of which drives a sprocket 14 and in turn a further sprocket 15 mounted on a shaft 16, via a chain 17. The shaft 16 carries sprockets 18 which drive the apron 7, and also carries a further sprocket 19 which drives a floor roller 21 via a chain 22 and a sprocket 23 mounted on a shaft 24 coupled to said roller 21. Also mounted on the shaft 24 is a sprocket 25 which drives, via a chain 26, a sprocket 27 mounted on a shaft 28 (Figure 2) to which one end of a Bellcrank lever 29 is fixedly attached, the other end being pivotally attached at 30 to a tine bar 31 carrying a plurality of tines 32 and forming part of a crop feed and stuffer mechanism indicated generally at 33. The shaft 28 also carries a sprocket which drives, via a chain 34, a sprocket 35 which in turn drives the crop pick-up device 3.

As is conventional, the shaft 24 and the sprocket 25 have associated therewith a shear bolt arrangement including, on the one hand, said sprock-

et 25 which is freely rotatably mounted on the shaft 24 and, on the other hand, a short arm 36 affixed to the shaft 24 and which carries a shear bolt 40; said shear bolt 40 coupling the short arm 36 to the sprocket 25 and being arranged to fail should the components driven from the shaft 24, i.e. the pick-up 3 and the feed mechanism 33, be subjected to a load greater than that determined by the shear bolt.

In accordance with the present invention, the tine bar 31 is provided with a safety device comprising at least one break-away mechanism indicated generally at 37. Such a break-away mechanism 37 preferably is provided between the tine bar 31 and a frame member of the baler at either only one end of said tine bar 31 or, alternatively, at both opposite ends of this tine bar 31. The break-away mechanism 37 comprises a housing in the form of a U-shaped member the main limbs of which are provided by two rectangular plates 38 welded to a cross limb 39. It will be appreciated that this housing can be formed as one piece, if desired. The otherwise open end of the housing is welded or otherwise attached to a bush 41 pivotally coupled via a pivot 42 to one end of a short arm 43, the other end of which is fixed to the frame 1 of the baler. Within the housing of the break-away mechanism 37 is mounted a rod 44, one end of which extends through an aperture in the cross limb 39 of the housing and is pivotally attached to an extension 45 provided at one end of the tine bar 31. The point of attachment of the rod 44 to the tine bar extension 45 may be located on the extension 45 itself as indicated at 46 or, as illustrated in Figure 2 of the drawings, on the end of a short arm 47 attached to said tine bar extension 45. These alternative fixing points enable the normal path of the tips of the tines 32 to be varied, as required to suit the crop material being handled by the baler. The rod 44 is connected to the appropriate pivot point by a bush 48 carried by a U-shaped plate 49 which itself is attached to the rod 44, said bush 48 being pivotally mounted on a pivot pin 52 carried by the extension 45 or the short arm 47 attached thereto. Disposed between the plate 49 and the cross limb 39 of the break-away housing is a shock-absorbing washer 51.

The other end of the rod 44 is threaded and receives a cup nut 53 which is attached to a rectangular plate 54 arranged to slide between the main limbs 38 of the break-away housing. Extending between the plate 54 and the cross limb 39 of the break-away housing is a spring 55, the spring rate of which is relatively high. It will be seen that the spring 55 operates to urge the plate 54, and hence the rod 44, inwardly of the housing.

In operation of the round baler described, the baler is towed by the tractor in the direction indicated by the arrow A in Figure 1 of the drawings and a drive is imparted to the drive shaft 11 from the P.T.O. of the towing tractor. Thus, tines 56 forming part of the pick-up device 3, are rotated such that their tips describe a generally circular path as indicated at 60 although that path is deflected radially inwardly as it meets the path of the tines 32 of the feed mechanism 33. Thus, crop material is picked up from the ground by the pick-up tines 56 and is fed thereby to the feed and stuffer mechanism 33 at which point, the tines 32 of the latter take over the feeding of the crop material towards the bale chamber of the baler. The tines 32 of the feed and stuffer mechanism 33 extend through respective slots in a feed platform or floor 57 and the tips of the tines 32 normally describe a generally kidney-shaped path indicated by the solid line 58 in Figure 2. Thus the tines 32 served to transfer the crop material from the pick-up device 3 to the bale chamber of the baler and more particularly, to the floor roller 21 thereof which helps to transfer the crop material into the bale chamber itself. As already mentioned, the tips of the tines 32 are moving at approximately 4 metres per second as they reach the right-hand portion of their clockwise path of movement as shown in Figure 2 of the drawings, whereas the peripheral speed of the bale being formed is approximately 2 metres per second. Accordingly, the tines 32 tend to compact the wad of crop material being fed at a given instant into the bale chamber and if that wad of material is excessively dense, then a high peak load can be exerted on the tines 32 which, without the present invention, could result in the failure of the shear bolt 40 in order to protect the drive mechanism for the feed and stuffer mechanism 33. However, with the present invention, high peak loads are allowed for inasmuch as they result in the operation of the break-away mechanism 37 in the following manner.

The spring 55 of the break-away mechanism 37 is chosen so as to render the break-away device "inoperative" up to a predetermined load to which the tines 32 are subjected in normal operation of the baler. In other words, under these "normal" operating conditions the break-away mechanism 37 acts as if it were a rigid link of a given length. If said predetermined load is exceeded, then the tines 32 are able, in effect, to rotate anticlockwise around the shaft 30 of the Bellcrank mechanism 29 while the latter continues to rotate in the clockwise direction, the result of these combined movements being that, in reality, the tines 32 are merely prevented from following their normal path 58 and follow a shortened or curtailed path indicated by the broken line 59 in Figure 2 of the drawings. In fact, the shortened path 59 represents the minimum path which the tines 32 will follow, it being appreciated that the actual path followed by the tines 32 may be any falling between the path 59 and the normal path 58, depending on the precise load to which these tines 32 are subjected.

Upon the tines 32 being subjected to a load in excess of that determined by the spring 55, the rod 44 is pulled from the break-away housing, whereby the spring 55 is compressed, the extent of movement being, as already explained, dependent on the precise load to which the tines 32 are subjected. Once the temporary peak load has been removed, the spring 55 will expand and return the rod 44 to the "normal" operating position so that these tines 32 again will follow the normal path 58. In order to reduce the noise occasioned by the return of the rod 44 to its "normal" position within the break-away housing, the shock-absorbing washer 52 is provided. If the tines 32 are subjected to a load which demands relative "anticlockwise" movement of these tines 32 beyond that which can be accommodated by the compression of the spring 55, then it will be appreciated that the shear bolt 40 comes into action and is the final safeguard against damaging the drive to the feed and stuffer mechanism 33 and associated components. However, such a load is only likely to occur if a relatively large foreign object, such as a piece of wood or angle iron is picked up with the crop material and becomes wedged between the feed and stuffer mechanism 33 and the bale chamber. For all "normal" peak loads resulting from the feeding from time to time of relatively large wads of crop material, the break-away mechanism 37 will operate satisfactorily and thus accommodate those loads without causing, on the one hand, any damage to the drive mechanism, or associated components, and, on the other hand, failure of the shear-bolt 40 and the break-away mechanism 37 will immediately return the tine bar to its normal operation once that peak load has been removed.

If the alternative pivotal connection point 46 is chosen for the rod 44, then the tines 32 will normally follow the path indicated by the dot-dashed line 61. If the tines 32 follow this path, then their leading edges, i.e. the edges thereof facing the bale chamber inlet, make a more acute angle with the horizontal as they reach the end of that path (right-hand side as seen in Figure 2) and are then retracted from beneath the feed platform 57. This eventually can result in the crop material being dragged downwardly by the tines 32 onto said feed platform 57 resulting in so-called "hairpinning" which means that pieces of crop material accumulate in the tine slots of the feed platform 57 rather than being fed into the bale chamber. This happens with wet and leafy types of grass, such as silage, and when such crops are being baled, then it is preferable to use the connection point associated with the path 58. Otherwise, the connection point 46 is advantageous in that the tines 32 feed the crop material further into the bale chamber, and thus are more positive in the feeding and stuffing action, before being retracted.

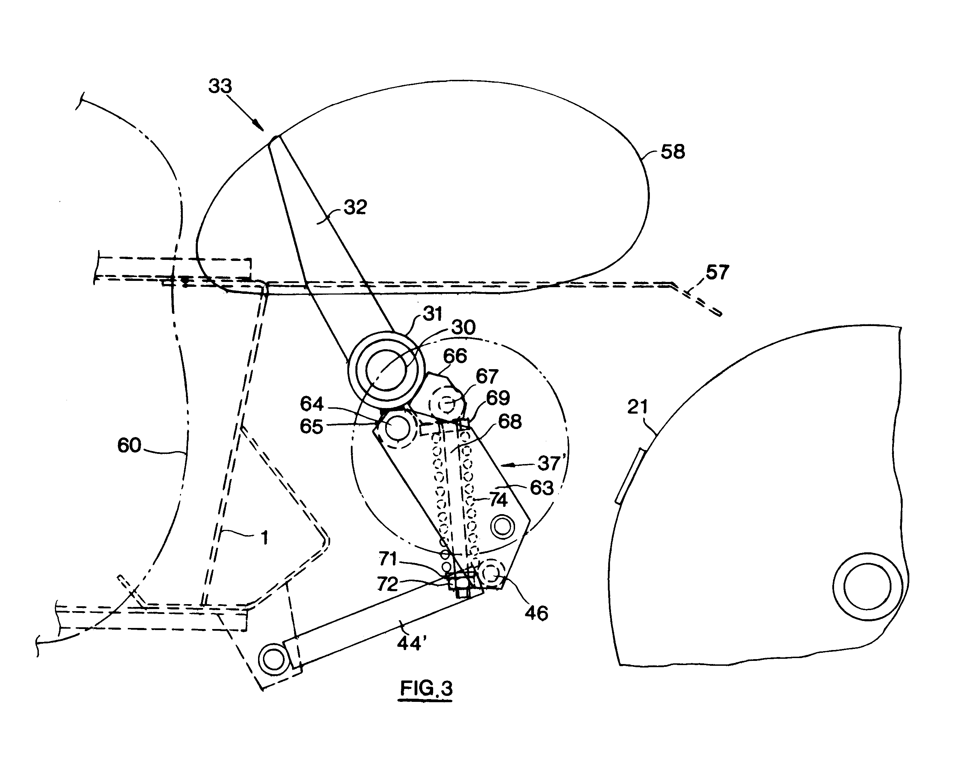

Turning to Figure 3, this drawing shows an alternative embodiment of, the present invention in which the break-away mechanism 37' takes a different form. In this embodiment, the break-away mechanism 37 of the first embodiment is replaced by a rod or link 44' of fixed length, it being appreciated that said break-away mechanism 37 of the frist embodiment is, in effect, of variable length due to the manner in which this mechanism 37 is conceived. The rod 44' of the alternative embodiment according to Figure 3 is again capable of being pivotally attached to the tine bar 31 at two different locations, the alternative location again being referenced 46. However, in this embodiment, the tine bar extension 45 which, in the first embodiment, was a single element, is replaced by a pair of spaced plates or levers 63 which are coupled to each other by a brace 69; said plates 63 and brace 69 together forming a clevis structure which is pivotally attached at the lower end to one end of the rod 44' and at the other end to a pivot 64 carried by a bushing 65 attached to the tine bar 31. The tine bar 31 carries a pair of spaces apart brackets 66 which together also form the clevis structure to which is pivotally attached at 67 one end of an eye bolt 68; said bolt 68 extending through an aperture in the brace 69. The other and threaded end of the bolt 68 carries a washer 71 secured by a nut 72. A spring 74 acts between the brace 69 attached to the levers 63 and the washer 71 retained on the lower end of the bolt 68.

In "normal" operation of the baler, the tine bar 31 operates as in the first embodiment described, with the tines 32 following the path 58. However, if the tines 32 are subjected to a high peak load due, for example, to a relatively large wad of crop material being fed into the bale chamber, then again, in effect, the tine bar 31 rotates anticlockwise (as seen in Fig. 3) around the shaft 30 of the Bellcrank mechanism while said Bellcrank mechanism itself rotates in the clockwise direction, the result being that the tines 32 are able to fold back in the general manner of a pen-knife blade relative to the levers or plates 63. This action takes place because the tine bar 31 can pivot about the pivot 64 and this movement is accommodated by the compression of the spring 74 which results from general upward movement of the eye bolt 68 following the anticlockwise rotation of the brackets 66. Thus, as in the frist embodiment, the tines 32 are able to follow a shortened path (not shown) which thus accommodates any peak loads, the arrangement being such that the tines 32 are automatically returned under the action of the spring 74 to their normal operating path once that peak load has been removed. Again, a shear bolt (not shown) is provided in order to provide an overriding safety device should the tines be subjected to a particularly excessive load.

It will be seen that the present invention provides a safety device for a round baler in which the problem of intermittent peak loads is accommodated by providing a break-away mechanism for the feeder and stuffer tines which follow a shortened path of movement until such time as the peak load is removed, whereupon they revert to their normal path of movement. The break-away mechanism is of relatively simple construction and can be fitted, without difficulty, to existing round balers equiped with a feed and stuffer mechanism of the type as shown.

**Claims**

1. A round baler comprising a bale chamber, a crop pick-up device (3) operable to pick up crop from the ground and a crop feed mechanism (33) operable to feed crop into the bale chamber from the pick-up device (3), the feed mechanism (33) comprising at least one tine bar (31) fitted with a plurality of tines (32), a drive (11 to 27) operable to drive the tine bar (31) so that the tips of the tines (32), during normal operation, describe an elongated operative path of movement (58) extending in the direction from the pick-up device (3) to the bale chamber, and a safety device (37/37') to protect the drive (11 to 27) and the tine bar (31) if the feed mechanism (33) is subjected to loads in excess of a predetermined value, characterized in that the safety device comprises a break-away mechanism (37/37') operable to permit the tines (32) to follow a shortened path of movement (59) when subjected to a load in excess of said predetermined value and to revert to the normal path of movement (58) when said predetermined value is no longer exceeded.

2. A round baler according to claim 1 characterized in that :
   - the drive (11 to 27) comprises Bellcrank lever means (29) coupled, at one end, to a rotary drive shaft (28) and pivotally coupled, at the other end, to the tine bar (31) to transmit motive power thereto;
   - the feed mechanism (33) comprises a slotted feed platform (57) extending between the pick-up device (3) and the bale chamber;
   - the tine bar (31) has at least one extension (45/37') coupled thereto and extending therefrom in the direction generally opposite to the orientation of the feed tines (32); and
   - the feed mechanism (33) further also comprises linkage means (37/44') pivotally coupled at one end to the baler frame (1) and at the other end to the free end of the tine bar extension (45/37'); the arrangement being such that, as the Bellcrank lever means (29) are rotated by the drive shaft (28), the tine bar extension (45/37') and the linkage means (37/44') cooperate to cause the tips of the feed tines (32) to describe a generally kidney shaped path of movement (58), part of which extends above the feed platform (57) and in the direction from the pick-up device (3) to the bale chamber, this part thus forming the operative feed stroke of the feed tines (32), and the other part of which extends beneath the feed platform (57) and in the opposite direction thus forming the inoperative return stroke of the feed tines (32).

3. A round baler according to claim 2 characterized in that there are provided a plurality of attachment points (46) for the linkage means (37/44') to the tine bar extension (45/37') whereby the length of the normal path of movement (58, 61) of the tines (32) is variable.

4. A round baler according to any of the claims 1 to 3 characterized in that the break-away mechanism (37/37') comprises resilient means (55/74) which bias the tines (32) towards their normal operative path of movement (58).

5. A round baler according to either one of claims 2 and 3 or claim 4 when dependent from claim 2 or 3 characterized in that the linkage means comprise said break-away mechanism (37).

6. A round baler according to claim 5 characterized in that the break-away mechanism 537) comprises :
   - a first telescopic member (38, 39) pivotally attached at one end to a frame member (1) of the baler,
   - a second telescopic member (44) pivotally coupled to the tine bar extension (45), and
   - resilient means (55) disposed therebetween to urge said first and second telescopic members (38, 39 resp. 44) to telescopingly contract when the feed mechanism (33) is subjected to a load which is inferior to said predetermined value and to permit these members (38, 39 resp. 44) to telescopingly extend with respect to each other if the feed tines (32) are subjected to a load in excess of said predetermined value whereby the feed tines (32) follow said shortened path of movement (59).

7. A round baler according to claim 6, characterized in that :
   - the first telescopic member is formed by a housing (38, 39) pivotally attached at one end to said frame member (1) and having telescopingly mounted therein said second member which is in the form of a rod (44) extending through the other end of the housing (38, 39) for pivotal connection to the tine bar extension (45);
   - said rod (44) carrying at its end disposed within the housing (38, 39) abutment means (54) for one end of the resilient means (55) of which the other end acts against said other end of the housing (38, 39); the arrangement being such that said rod (44) is pulled from the housing (38, 39) if the tines (32) are subjected to a load in excess of that required to compress the resilient means (55) whereby the feed mechanism (33) is able to accomodate that load.

8. A round baler according to claim 7 characterized in that the rod (44) is attached to the cross limb of a U-shaped member (49) which itself is pivotally attached to the tine bar extension (45), and shock-absorbing means (51) are disposed between that member (52) and said other end of the housing (38, 39).

9. A round baler according to claim 7 or 8, characterized in that the housing (38, 39) of the break-away mechanism (37) comprises a U-shaped member having main limbs (38) and a cross limb (39), and in that the abutment means carried by the rod (44) is in the form of a retangular plate (54) to which is attached a member (53) threadedly received by the associated end of the rod (44).

10. A round baler according to either one of claims 2 and 3 or claim 4 when dependent from claim 2 or 3 characterized in that the tine bar extension comprises said break-away mechanism (37').

11. A round baler according to claim 10 characterized in that the break-away mechanism (37') comprises :
   - lever means (63) pivotally attached at one end to the tine bar (31) and pivotally attached at the other end to said linkage means (44'), and
   - resilient means (68, 74) acting between the tine bar (31) and the lever means (63) for urging the lever means (63) to one extreme position relative to the tine bar (31) when the latter is subjected to a load which is inferior to said predetermined value and for permitting the lever means (63) to move away from ths extreme position when the tine bar (31) is subjected to a load in excess of said predetermined value; said resilient means (68, 74) including a member (68) pivotally attached at one end (67) to the tine bar (31) at an offset location relative to the pivotal coupling of the lever means (63) to said tine bar (31) and further also including spring means (74) acting between said member (68) and the lever means (63); the arrangement being such that the break-away mechanism (37) is operable to allow the tines (32) to fold in the manner of a pen-knife with respect to the lever means (63) when subjected to peak loads in excess of said predetermined value which is determined by the rate of said spring means (74).

12. A round baler according to claim 11 characterized in that :
   - lever means (63) comprise an apertured support (69),
   - said member (68) of the resilient means (68, 74) extends through said apertured support (69), and
   - the spring means (74) act between said apertured support (69) and an abutment means (71) provided at the other end of said member (68) of the resilient means (68, 74).

13. A round baler according to claim 11 or 12 characterized in that abutment means (66) are provided on the tine bar (31) for the lever means (63) to abut thereagainst when in said one extreme position.

FIG. 1

EP 0 464 267 A1

EP 0 464 267 A1

FIG.2

FIG.3

European
Patent Office

EUROPEAN SEARCH
REPORT

Application Number

EP 90 20 1687

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 198 804   (W. KONEKAMP et al.)<br>* column 5, lines 1-41; figure 4 *<br>– – – | 1-7,10-13 | A 01 F 15/10 |
| Y | EP-A-0 235 847   (FORD NEW HOLLAND, INC.)<br>* column 3, lines 8-19; column 4, lines 7-21; figures 1,2 *<br>– – – | 1-7 | |
| Y | FR-A-2 049 731   (SPERRY RAND CORP.)<br>* page 8, lines 15-25; figure 1 * | 6,7 | |
| A | | 9 | |
| | – – – | | |
| Y | US-A-2 409 478   (F.P. DICKOW)<br>* column 2, line 41 - column 3, line 16; figures 2,3 *<br>– – – | 1,2,4,<br>10-13 | |
| A | GB-A-897 410   (HARRISON, McGREGOR & GUEST LTD.)<br>* page 2, line 6 - page 3, line 45; figures 1-4 *<br>– – – | 10,11 | |
| A | FR-A-1 185 953   (SOCIETE DE RECHERCHES ET D'EXPLOITATION D'INVENTIONS GUILLOTIN)<br>* page 1, column 2, line 33 - page 2, column 1, line 17; figures 1,2 * | 10,11 | |

– – – – –

| | TECHNICAL FIELDS SEARCHED (Int. Cl.5) |
|---|---|
| | A 01 F |

The present search report has been drawn up for all claims

| Place of search | Date of completion of search | Examiner |
|---|---|---|
| Berlin | 08 February 91 | MARTIN DEL RIO A |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

-------------------------------------------------------

& : member of the same patent family, corresponding
    document